# EUROPÄISCHE PATENTSCHRIFT

(11) **EP 2 988 843 B1**
(45) Veröffentlichungstag und Bekanntmachung des Hinweises auf die Patenterteilung: **13.06.2018**
(21) Anmeldenummer: 14717731.5
(22) Anmeldetag: 11.04.2014
(51) Int. Cl.: B01D 19/00, D21D 5/26

(54) **SUSPENSIONSENTGASUNG**
SUSPENSION DEGASSING
DÉGAZAGE DE SUSPENSIONS

(30) Priorität: 26.04.2013 DE 102013207639
(43) Veröffentlichungstag der Anmeldung: 02.03.2016
(73) Patentinhaber: Voith Patent GmbH, 89522 Heidenheim (DE)
(72) Erfinder: ERZLER, Axel, 89275 Elchingen (DE); KRIECHBAUM, Günther, 89522 Heidenheim (DE)
(86) Internationale Anmeldenummer: PCT/EP2014/057336
(87) Internationale Veröffentlichungsnummer: WO 2014/173699

(56) Entgegenhaltungen:
- EP-A1- 1 416 084
- EP-A2- 1 143 066
- EP-B1- 1 654 416
- DE-A1-102010 041 100
- US-A- 4 435 196

## Beschreibung

Die Erfindung betrifft eine Vorrichtung zum Entgasen einer Faserstoffsuspension in einem geschlossenen Entgasungsraum mit wenigstens einem Zulauf, über den die Faserstoffsuspension eingebracht wird, wobei sich die Faserstoffsuspension im unteren Teil des Entgasungsraumes sammelt, der Entgasungsraum oberhalb Suspensionspegels der sich sammelnden Faserstoffsuspension mit einer das abgesonderte Gas heraussaugenden Unterdruckquelle verbunden ist, zumindest einem unterhalb des Suspensionspegels liegenden und die entgaste Faserstoffsuspension abführenden Ablauf und einem zwischen Zulauf und Ablauf in Höhe des Suspensionspegels vorhandenen Überlaufs, wobei Zulauf, Überlauf und Ablauf jeweils horizontal voneinander beabstandet sind.

Derartige Vorrichtungen zur Entgasung sind seit längerer Zeit bekannt, wobei das Funktionsprinzip im Wesentlichen darin besteht, die Faserstoffsuspension unter Unterdruck sieden zu lassen.
Während über die Unterdruckquelle das von der Faserstoffsuspension abgesonderte Gas abgesaugt wird, kann die entgaste Faserstoffsuspension über eine Öffnung im Behälterboden abgeführt werden.

Dabei sorgt ein Überlauf nicht nur für die Stabilisierung des Suspensionspegels im Entgasungsraum sondern neben der Abfuhr überschüssiger Faserstoffsuspension auch für die Abfuhr von auf der Suspensionsoberfläche angesammelten, leichten Verunreinigungen der Faserstoffsuspension.

Um die Entgasung zu intensivieren ist es beispielsweise aus der DE 41 06 140 sowie der DE 199 47 905 bekannt, die zugeführte Faserstoffsuspension gegen die Behälterwand des Entgasungsraumes prallen zu lassen, was zum Versprühen der Faserstoffsuspension im Behälter führt.

Dies hat jedoch entsprechende Turbulenzen in der sich sammelnden Faserstoffsuspension zur Folge, wodurch die hydraulische Stabilität nachgeschalteter Aggregate beeinträchtigt wird.

Um dem entgegenzuwirken, werden Zu- und Ablauf meist in großem Abstand voneinander angeordnet und damit einhergehend die Behälter sehr groß dimensioniert.

Aus der EP 1 654 416 B1 ist hierzu eine Lösung bekannt, bei der sich eine längliche Überlaufrinne zwischen den beiden Seitenwänden erstreckt, was allerdings die Strömung zwischen Zu- und Ablauf beeinträchtigt.

Die Aufgabe der Erfindung ist es daher die Ausdehnung des Entgasungsraumes und damit den Materialaufwand ohne wesentliche Beeinträchtigung der Funktion zu vermindern.

Erfindungsgemäß wurde die Aufgabe durch Anspruch 1 gelöst, wobei der Überlauf von wenigstens einer länglichen, quer zur Strömungsrichtung der Faserstoffsuspension zwischen Zu- und Ablauf verlaufenden und nach oben offenen Überlaufrinne gebildet wird.

Die länglichen Überlaufrinnen ermöglichen wegen der langen Überlaufkanten die Abfuhr großer Mengen an Faserstoffsuspension, falls dies erforderlich ist. Da die langen Seiten quer zur, vom Ab- zum Zulauf gerichteten Strömungsrichtung der Faserstoffsuspension verlaufen, sind diese auch hinsichtlich der Beruhigung des Suspensionspegels sehr wirksam.

Hinzu kommt, dass die quer liegenden Überlaufrinnen auch eine Verkürzung des Entgasungsraumes ermöglichen, ohne dass sich dies auf die Abstände zwischen Zulauf und Überlauf sowie zwischen Überlauf und Ablauf auswirkt.

Dabei wird der Überlauf von zwei quer zur Strömungsrichtung der Faserstoffsuspension nebeneinander angeordneten und voneinander beanstandeten Überlaufrinnen gebildet. Da mehrere Überlaufrinnen vorhanden sind, ermöglicht der Kanal zwischen benachbarten Überlaufrinnen eine ausreichende Strömung der Faserstoffsuspension vom Zu- zum Ablauf.

Um möglichst lange Überlaufkanten zu realisieren und damit auch große Überlaufmengen aufnehmen zu können, sollte sich die zwei Überlaufrinnen zumindest bis an eine Seitenwand des Entgasungsraumes erstrecken.

In diesen Fällen ist es dann auch von Vorteil, wenn die Überlaufrinnen über zumindest eine, bei nur einer Überlaufrinne vorzugsweise über beide angrenzenden Seitenwände des Entgasungsraumes mit einer Abführleitung verbunden sind. Die Abfuhr seitlich und nicht nach unten aus dem Entgasungsraum vereinfacht die Konstruktion und vermindert die Bauhöhe der Vorrichtung erheblich.

Des Weiteren wird es damit auch möglich, die Überlaufrinnen mit wenigstens einer, bei nur einer Überlaufrinne vorzugsweise mit beiden angrenzenden Seitenwänden fest zu verbinden. Da sich diese Verbindung stabilisierend auf die Konstruktion auswirkt, kann dadurch oft auch die Wandstärke des Entgasungsraumes verringert werden.

Um den Abfluß von möglichst viel Faserstoffsuspension bei möglichst geringer Ausdehnung in Richtung Überlaufrinne bzw. Zulauf zu erlauben, sollte die zum Entgasungsraum weisende Öffnung des Ablaufs einen länglichen Querschnitt haben, wobei die längere Erstreckung annähernd parallel zur Überlaufrinne verläuft.

Damit diese längliche Querschnittsform nicht den Anschluss außerhalb des Entgasungsraumes beeinträchtigt, sollte sich der Querschnitt des Ablaufs in Strömungsrichtung ändern und vorzugsweise kreisrund werden.

Zur konstruktiven Vereinfachung des Zulaufs sollte dieser von maximal drei, vorzugsweise zwei durch die Seitenwand des Entgasungsraumes geführten Zuleitungen gebildet werden. Für die umfassende Entgasung ist es dabei vorteilhaft, wenn jede Zuleitung in mehrere Düsen mündet, die die Faserstoffsuspension oberhalb des Suspensionspegels im Entgasungsraum umfassend versprühen. Dabei hat es sich hinsichtlich Aufwand und Wirkung als optimal erwiesen, wenn die Düsen in zwei oder drei, vorzugsweise parallelen Reihen im Entgasungsraum angeordnet sind.

Nachfolgend soll die Erfindung an einem Ausführungsbeispiel näher erläutert werden. In der beigefügten Zeichnung zeigt:
Figur 1: einen schematischen Längsschnitt durch den Entgasungsraum 2 und
Figur 2: eine Draufsicht auf den Suspensionspegel 4 des Entgasungsraumes 2.

Wie in den Figuren gezeigt, wird der erfindungsgemäße Entgasungsraum 2 zum Entgasen einer Faserstoffsuspension 1 aus einem langgestreckten und liegenden zylindrischen Behälter gebildet, dem, die der Papier- oder Kartonmaschine zuzugebende Faserstoffsuspension 1 als dünnes Gemisch über zwei oder drei Zuläufe 3 zugeführt wird.

Um die Entgasungsfähigkeit der Vorrichtung zu verbessern, wird die noch Gas enthaltende Faserstoffsuspension 1 über jeweils mehrere Düsen 10 der Zuläufe 3 oberhalb des Suspensionspegels 4 in den Behälter gesprüht, wobei das in der zugegebenen Faserstoffsuspension 1 eventuell als Blasen vorhandene Gas bereits abgeschieden wird, bevor die zugegebene Faserstoffsuspension 1 mit der im Behälter vorhandenen Faserstoffsuspension 1 in Verbindung kommt.

Die Düsen 10 der Zuläufe 3 sprühen die Faserstoffsuspension 1 in Richtung der Behälterdecke und sind in zwei bzw. drei, parallel zur Längsseite des zylindrischen Behälters verlaufenden Reihen angeordnet, wobei jeder Zulauf 3 von einer Zulaufleitung 9 mit einer Reihe von Düsen 10 gebildet wird.

Während sich im unteren Teil des Entgasungsraumes 2 die Faserstoffsuspension 1 sammelt, wird der obere Teil von Gas ausgefüllt, das über einen, mit einer Unterdruckquelle 5 verbundenen Sauganschluss im oberen Teil abgesaugt wird.

Im, den Zuläufen 3 abgewandten Teil des Entgasungsraumes 2 ist ein Ablauf 6 angeordnet, der in ein nicht dargestelltes Leitungssystem zur Ableitung der gasfreien Faserstoffsuspension 1 mündet. Die, zum Entgasungsraum 2 weisende Öffnung des Ablaufs 6 hat einen länglichen, hier etwa elliptischen Querschnitt, wobei die langen Seiten dieses Querschnitts senkrecht zu den langen Seiten des Entgasungsraumes 2 verlaufen. Auf diese Weise wird eine große Öffnung mit geringer Ausdehnung in Richtung Zulauf 3 geschaffen, was sich entsprechend positiv auf die Längsausdehnung des Entgasungsraumes 2 auswirkt. Um den Anschluss des Ablaufs 6 zu vereinfachen verändert sich dessen Querschnitt nach außen zu einem kreisrunden Querschnitt.

Horizontal zwischen dem Zulauf 3 und dem Ablauf 6 befindet sich ein Überlauf für die überschüssige Faserstoffsuspension 1. Die hierbei abgeführte Faserstoffsuspension 1 kann in bekannter Weise wieder an den Zulauf 3 zurückgeführt werden.

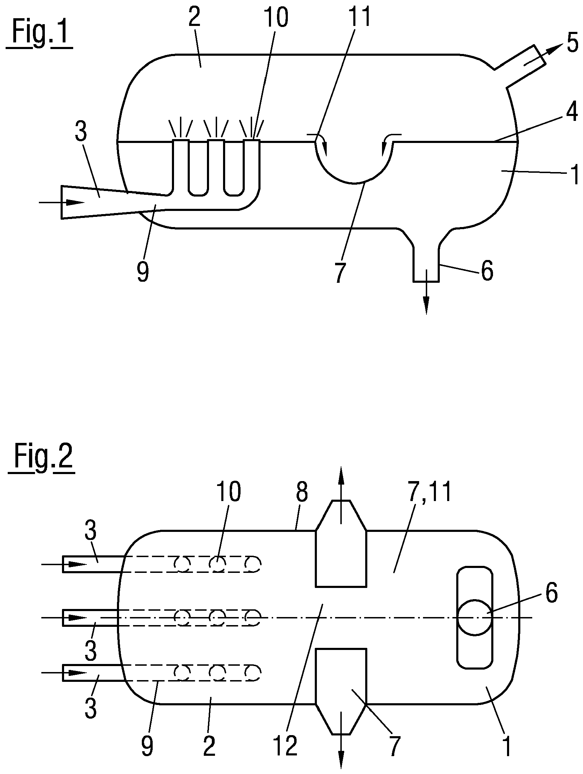

Durch das Einsprühen der Faserstoffsuspension 1 kommt es insbesondere an der Oberfläche der sich sammelnde Faserstoffsuspension 1 zu Turbulenzen und damit zu hydraulischen Instabilitäten, welche durch den Überlauf beruhigt werden.
Um die Ausdehnung der langen Seite des Entgasungsraumes 2 ohne Auswirkung auf den Abstand zwischen Zulauf 3 und Überlauf sowie zwischen Überlauf und Ablauf 6 minimieren zu können, ist der Überlauf gemäß Figur 2 als eine längliche, nach oben offen Überlaufrinne 7 ausgebildet, dessen lange Seiten senkrecht zu den langen Seiten des Entgasungsraumes 2 verlaufen.

Der Überlauf wird gemäß bei Figur 2 von zwei, quer zur Strömungsrichtung der Faserstoffsuspension 1 (vom Zulauf 3 zum Ablauf 6) nebeneinander angeordneten und voneinander beabstandeten Überlaufrinnen 7 gebildet. Auch diese Überlaufrinnen 7 sind länglich und nach oben offen ausgebildet, wobei die langen Seiten der Überlaufrinnen 7 senkrecht zu den langen Seiten des Entgasungsraumes 2 verlaufen.
Der zwischen den beiden Überlaufrinnen 7 vorhandene Kanal 12 ermöglicht eine ausreichend große Strömung vom Zulauf 3 zum Ablauf 6 trotz der Beeinträchtigung durch die Überlaufrinnen 7.

Dabei erstreckt sich jeweils ein Ende jeder Überlaufrinne 7 bis zur benachbarten Seitenwand 8 des Entgasungsraumes 2. Die Verbindung mit der Seitenwand 8 verbessert auch hier die Stabilität der Konstruktion.
Des Weiteren ist jede Überlaufrinne 7 durch die entsprechende Seitenwand 8 des Entgasungsraumes 2 mit einer Abführleitung verbunden.

Da die Faserstoffsuspension 1 seitlich abgeführt wird, kann auch die Ausdehnung der gesamten Vorrichtung nach unten vermindert werden.

Im Ergebnis ist der Entgasungsraum 2 sehr kompakt gestaltet, ohne dass dies zu einer Verkürzung der Abstände zwischen Zulauf 3 und Überlauf sowie zwischen Überlauf und Ablauf 6 führt.

## Patentansprüche

1. Vorrichtung zum Entgasen einer Faserstoffsuspension (1) in einem langgestreckten, geschlossenen Entgasungsraum (2) mit wenigstens einem Zulauf (3), über den die Faserstoffsuspension (1) eingesprüht wird, wobei sich die Faserstoffsuspension (1) im unteren Teil des Entgasungsraumes (2) sammelt, der Entgasungsraum (2) oberhalb Suspensionspegels (4) der sich sammelnden Faserstoffsuspension (1) mit einer das abgesonderte Gas heraussaugenden Unterdruckquelle (5) verbunden ist, zumindest einem unterhalb des Suspensionspegels (4) liegenden und die entgaste Faserstoffsuspension (1) abführenden Ablauf (6) und einem zwischen Zulauf (3) und Ablauf (6) in Höhe des Suspensionspegels (4) vorhandenen Überlaufs, wobei Zulauf (3), Überlauf und Ablauf (6) jeweils horizontal voneinander beabstandet sind, **dadurch gekennzeichnet, dass** der Zulauf (3) von zwei oder drei durch die Seitenwand (8) des Entgasungsraumes (2) geführten Zuleitungen (9) gebildet wird und der Überlauf zwei längliche, nach oben offene, quer zur Strömungsrichtung der Faserstoffsuspension (1) nebeneinander angeordnete und voneinander beabstandete Überlaufrinnen (7) aufweist, wobei die langen Seiten der Überlaufrinnen (7) senkrecht zu den langen Seiten des Entgasungsraumes (2) verlaufen, sich beide Überlaufrinnen (7) bis an eine Seitenwand (8) des Entgasungsraumes (2) erstrecken und die Überlaufrinnen (7) über die angrenzende Seitenwand (8) des Entgasungsraumes (2) mit einer Abführleitung verbunden sind.

2. Vorrichtung nach Anspruch 1, **dadurch gekennzeichnet, dass** die Überlaufrinnen (7) mit einer angrenzenden Seitenwand (8) fest verbunden sind.

3. Vorrichtung nach einem der vorhergehenden Ansprüche, **dadurch gekennzeichnet, dass** die zum Entgasungsraum (2) weisende Öffnung des Ablaufs (6) einen länglichen Querschnitt hat, wobei die längere Erstreckung annähernd parallel zur Überlaufrinne (7) verläuft.

4. Vorrichtung nach Anspruch 3, **dadurch gekennzeichnet, dass** sich der Querschnitt des Ablaufs (6) in Strömungsrichtung ändert und vorzugsweise kreisrund wird.

5. Vorrichtung nach einem der vorhergehenden Ansprüche, **dadurch gekennzeichnet, dass** die Zuleitung (9) in mehrere Düsen (10) mündet, die die Faserstoffsuspension (1) oberhalb des Suspensionspegels (4) im Entgasungsraum (2) versprühen.

6. Vorrichtung nach Anspruch 5, **dadurch gekennzeichnet, dass** die Düsen (10) in parallelen Reihen im Entgasungsraum (2) angeordnet sind.

## Claims

1. Apparatus for degassing a fibrous stock suspension (1) in an elongate, closed degassing space (2) with at least one inlet (3), via which the fibrous stock suspension (1) is sprayed in, the fibrous stock suspension (1) collecting in the lower part of the degassing space (2), the degassing space (2) being connected above a suspension level (4) of the collecting fibrous stock suspension (1) to a vacuum source (5) which sucks out the separated gas, at least one outlet (6) which lies below the suspension level (4) and discharges the degassed fibrous stock suspension (1), and a level drain which is present between the inlet (3) and the outlet (6) at the level of the suspension level (4), the inlet (3), the level drain and the outlet (6) being spaced apart in each case horizontally from one another, **characterized in that** the inlet (3) is formed by two or three feed lines (9) which are guided through the side wall (8) of the degassing space (2), and the level drain has two elongate level drain channels (7) which are open towards the top, are arranged next to one another transversely with respect to the flow direction of the fibrous stock suspension (1), and are spaced apart from one another, the long sides of the level drain channels (7) running perpendicularly with respect to the long sides of the degassing space (2), the two level drain channels (7) extending up to a side wall (8) of the degassing space (2), and the level drain channels (7) being connected via the adjoining side wall (8) of the degassing space (2) to a discharge line.

2. Apparatus according to Claim 1, **characterized in that** the level drain channels (7) are connected fixedly to an adjoining side wall (8).

3. Apparatus according to either of the preceding claims, **characterized in that** that opening of the outlet (6) which points towards the degassing space (2) has an elongate cross section, the longer extent running approximately parallel to the level drain channel (7).

4. Apparatus according to Claim 3, **characterized in that** the cross section of the outlet (6) changes in the flow direction and preferably becomes circular.

5. Apparatus according to one of the preceding claims, **characterized in that** the feed line (9) opens into a plurality of nozzles (10) which spray the fibrous stock suspension (1) into the degassing space (2) above the suspension level (4).

6. Apparatus according to Claim 5, **characterized in that** the nozzles (10) are arranged in parallel rows in the degassing space (2).

## Revendications

1. Dispositif de dégazage d'une suspension fibreuse (1) dans un espace de dégazage (2) fermé, allongé, comprenant au moins une alimentation (3) par le biais de laquelle la suspension fibreuse (1) est injectée, la suspension fibreuse (1) s'accumulant dans la partie inférieure de l'espace de dégazage (2), l'espace de dégazage (2) au-dessus du niveau de suspension (4) de la suspension fibreuse s'accumulant (1) étant connecté à une source de dépression (5) aspirant le gaz séparé, au moins une sortie (6) située en dessous du niveau de la suspension (4) et évacuant la suspension fibreuse (1) dégazée et un trop-plein prévu entre l'alimentation (3) et la sortie (6) à la hauteur du niveau de suspension (4), l'alimentation (3), le trop-plein et la sortie (6) étant dans chaque cas espacés horizontalement les uns des autres, **caractérisé en ce que** l'alimentation (3) est formée par deux ou trois conduites d'alimentation (9) guidées à travers la paroi latérale (8) de l'espace de dégazage (2) et le trop-plein présentant deux rigoles de trop-plein (7) allongées, ouvertes vers le haut, disposées l'une à côté de l'autre transversalement à la direction d'écoulement de la suspension fibreuse (1) et espacées l'une de l'autre, les côtés longs des rigoles de trop-plein (7) s'étendant perpendiculairement aux côtés longs de l'espace de dégazage (2), les deux rigoles de trop-plein (7) s'étendant jusqu'à une paroi latérale (8) de l'espace de dégazage (2) et les rigoles de trop-plein (7) étant connectées à une conduite d'évacuation par le biais de la paroi latérale adjacente (8) de l'espace de dégazage (2).

2. Dispositif selon la revendication 1, **caractérisé en ce que** les rigoles de trop-plein (7) sont connectées fixement à une paroi latérale adjacente (8) .

3. Dispositif selon l'une quelconque des revendications précédentes, **caractérisé en ce que** l'ouverture de la sortie (6) tournée vers l'espace de dégazage (2) présente une section transversale allongée, la plus longue étendue s'étendant approximativement parallèlement à la rigole de trop-plein (7).

4. Dispositif selon la revendication 3, **caractérisé en ce que** la section transversale de la sortie (6) varie dans la direction d'écoulement et est de préférence ronde circulaire.

5. Dispositif selon l'une quelconque des revendications précédentes, **caractérisé en ce que** la conduite (9) débouche dans plusieurs buses (10) qui pulvérisent la suspension fibreuse (1) au-dessus du niveau de suspension (4) dans l'espace de dégazage (2).

6. Dispositif selon la revendication 5, **caractérisé en ce que** les buses (10) sont disposées dans des rangées parallèles dans l'espace de dégazage (2).
